# FASCICULE DE BREVET EUROPEEN

(11) **EP 2 361 323 B1**
(45) Date de publication et mention de la délivrance du brevet: **13.04.2016**
(21) Numéro de dépôt: 08875629.1
(22) Date de dépôt: 14.11.2008
(51) Int. Cl.: C23C 2/00, G01N 21/71, G01N 21/85

(54) **MÉTHODE ET DISPOSITIF DE MESURE D'UNE COMPOSITION CHIMIQUE D'UN LIQUIDE MÉTALLIQUE ADAPTÉ À UN REVÊTEMENT D'UNE BANDE D'ACIER**
VERFAHREN UND VORRICHTUNG ZUM MESSEN EINER CHEMISCHEN ZUSAMMENSETZUNG EINES FLÜSSIGEN METALLS, DAS ZUM BESCHICHTEN EINES STAHLBANDS GEEIGNET IST
METHOD AND DEVICE FOR MEASURING A CHEMICAL COMPOSITION OF A LIQUID METAL SUITABLE FOR COATING A STEEL STRIP

(43) Date de publication de la demande: 31.08.2011
(73) Titulaire: Primetals Technologies France SAS, 42600 Savigneux (FR)
(72) Inventeur: MICHAUT, Marc, F-42152 L'Horme (FR); GRENIER, Benjamin, F-42740 Saint-Paul-En-Jarez (FR)
(74) Mandataire: Metals@Linz
(86) Numéro de dépôt international: PCT/FR2008/001608
(87) Numéro de publication internationale: WO 2010/055212

(56) Documents cités:
- EP-A- 0 362 577
- WO-A-02/063284
- WO-A-2008/067620
- DE-A1- 4 443 407
- US-A1- 2003 234 928

## Description

La présente invention concerne une méthode et un dispositif de mesure d'une composition chimique d'un liquide métallique adapté à un revêtement d'une bande d'acier selon les préambules des revendications 1 et 2.

Un cadre principal de l'invention se rapporte aux bains de revêtements métalliques au trempé de bandes d'acier, particulièrement à l'analyse chimique des dits bains de revêtement.

Par revêtement métallique, on entend tous types d'alliages métalliques destinés à améliorer la résistance à la corrosion des bandes d'acier. Particulièrement mais de manière non limitative, on entend les alliages de galvanisation composés majoritairement de zinc et d'aluminium.

La mesure de la composition chimique des bains de galvanisation est, en particulier, nécessaire pour ajuster la teneur en au moins un élément de l'alliage à l'aide par exemple de lingots de composition appropriée introduits selon une séquence appropriée dans un bain de liquide métallique destiné au revêtement. Elle fait appel à des techniques de mesure sur des échantillons prélevés dans le bain, solidifiés en lingotins puis analysés par spectroscopie. Cette méthode est fiable, mais présente cependant l'inconvénient d'une lenteur qui ne permet pas de réagir rapidement en modifiant, par exemple, l'alimentation du bain en lingots d'alliages. D'autre part, le prélèvement manuel dans le bain liquide expose les opérateurs à des conditions d'intervention dangereuses.

Des mesures similaires à partir de capteurs électrochimiques ont aussi été proposées comme celle décrite dans le document US 5,256,272. Ces capteurs sont toutefois fragiles et leur étalonnage doit être vérifié de manière fréquente par des analyses comparées avec les anciennes méthodes de prélèvement manuel et d'analyse sur lingotins.

D'autres méthodes de mesure visant une analyse en temps réel ont été proposées autour d'un procédé d'analyse spectroscopique par ablation laser, plus connue sous le nom de « Laser Induced Breakdown Spectroscopy » ou LIBS. Une telle méthode consiste à diriger vers la cible à analyser un très mince faisceau laser assez puissant pour qu'un tir très bref suffise à générer un plasma dont le rayonnement est soumis à une analyse spectrale. Une telle utilisation sur des bains de métal liquide est envisagée dans l'application WO 02/063284 qui propose de réaliser l'analyse du bain en surface d'un échantillon liquide circulant ou amené dans une cellule de mesure.

Or, notamment dans le cas de la galvanisation des bandes d'acier avec des alliages de zinc et d'aluminium, ce type de mesure en surface d'un échantillon liquide est soumis d'une part à un risque d'oxydation de surface et, d'autre part, à la présence de composés intermétalliques de fer, aluminium et zinc nommés « mattes » ou « dross » dont les teneurs en aluminium et zinc sont très différentes des teneurs moyennes du bain dans laquelle elles se forment. En effet, au contact du mélange liquide métallique se produit une dissolution du fer en provenance de surface de la bande. Ce fer dissous participe pour une part à la formation sur la surface de la bande d'une très mince couche de composé Fe₂Al₅Znₓ et, pour une autre part, diffuse vers le bain de métal liquide tant que la couche de Fe₂Al₅Znₓ n'est pas formée de manière continue. La couche de Fe₂Al₅Znₓ sert de support à la couche protectrice de zinc alors que le fer diffusé dans le bain va contribuer à former des particules de composés intermétalliques de Fe, Al et Zn d'une taille de quelques microns à quelques dizaines de micron.

La cinétique de germination et de croissance de ces composés intermétalliques dans les bains de galvanisation est connue de l'homme de métier. Selon la température du bain de zinc liquide et sa teneur en aluminium, la quantité de fer capable d'être dissoute varie dans des limites assez larges. Lorsque la teneur en fer diffusé dépasse la limite de solubilité, la nucléation et le grossissement de composés intermétalliques devient possible. Dans les processus habituels de galvanisation en continu, le bain de revêtement est toujours saturé en fer, il s'ensuit que tout le fer dissous à partir de la bande et diffusé dans le mélange liquide se trouve disponible pour la création au sein du bain liquide de particules de composés intermétalliques dont la taille peut atteindre plusieurs dizaines de microns. Selon leur composition qui détermine leur densité, ces particules décantent pour une part vers le fond du creuset ou surnagent, pour une part majoritaire, à la surface du bain liquide, et sont ainsi nommées usuellement mattes/dross de fond ou de surface.

La présence de ces composés intermétalliques dans l'échantillon, en particulier à sa surface, est donc de nature à fausser l'analyse en fournissant des concentrations des différents constituants mesurés - par exemple le zinc, l'aluminium et le fer - différentes de celles du bain lui même.

L'application WO 2008/067620 propose de résoudre le problème posé par les particules de composés intermétalliques, dits « dross de surface » qui flottent sur le bain liquide, en utilisant un système d'inspection automatique de surface permettant de discriminer la présence de dross sur le bain liquide, d'assurer ainsi le pointage d'un analyseur de type LIBS vers des zones libres de dross ou de déclencher l'action d'un dispositif d'écrémage des dross afin de libérer la surface du bain. Cette technique lourde et complexe de surveillance vidéo de la surface peut toutefois se révéler trop imprécise (voir impossible en cas de fort recouvrement de dross) pour garantir que le tir du laser d'ablation n'est pas dirigé vers des dross trop discrètes pour être identifiées comme telles par les systèmes de traitement d'image.

DE4443407A1 présente un dispositif de mesure d'une composition de métal liquide dans un bain comprenant des dross de fond et de surface, pour lequel un échantillon de métal liquide est prélevé via une tubulure verticale (de type « seringue ») dont une ouverture d'aspiration est plongée entre les zones de dross en surface et au fond afin de la remplir de métal liquide sur une hauteur donnée. Au sommet de cette hauteur une mesure de composition chimique est réalisée, par exemple via une analyse de type LIBS. Ce document divulgue qu'un moyen de chauffage de la tubulure est prévu afin d'éviter une solidification/rigidification de l'échantillon à l'état liquide prélevé et maintenu statiquement à une certaine hauteur dans la tubulure. Alternativement, US4995723A présente une méthode et un dispositif de mesure d'une composition chimique d'un échantillon situé en paroi latérale dans une première cavité de liquide métallique. La mesure en paroi se fait par une ouverture de paroi, elle-même située entre une couche de dross de surface et de fonds. Un gaz neutre à une température de plus de 300°C voire 500°C est injecté de l'extérieur vers l'ouverture de paroi (point de mesure) pour maintenir le métal sous forme liquide dans la cavité. Ni DE4443407A1, ni US4995723A ne soulèvent le fait que l'échantillon prélevé statiquement hors de la cavité ou mesuré via la paroi de cavité peut comporter des impuretés, car ils supposent l'absence de composés intermétalliques dans le dit échantillon, ce qui est physiquement quasiment impossible.

Un but de la présente invention est ainsi de proposer une méthode et un dispositif de mesure d'une composition chimique d'un liquide métallique adapté à un revêtement d'une bande d'acier, pour lesquels une mesure directe d'un échantillon de liquide métallique est qualitativement améliorée.

A partir d'une méthode de mesure d'une composition chimique d'un liquide métallique adapté à un revêtement d'une bande d'acier en défilement continu, pour laquelle le liquide métallique se composant d'un alliage de zinc et d'aluminium est formé de façon continue dans une première cavité et une mesure de sa composition est effectuée sur une surface de mesure directe dudit liquide, en ce qu'un moyen d'analyse de composition chimique effectue sa mesure physique en incidence directe avec la surface de mesure,
l'invention prévoit qu'un échantillon de liquide métallique atteignant la surface de mesure est soumis à un réchauffage à une température choisie de façon à isoler de ladite surface de mesure des impuretés à base principale de fer, le dit réchauffage destiné à remettre en solution dans le bain liquide des composés intermétalliques à base de fer présents sous forme d'impuretés et ainsi de ne préserver que la composition chimique du liquide métallique dans la surface de mesure directe.

La terminologie de surface de mesure directe signifie en particulier qu'un moyen d'analyse de composition chimique (tel qu'un faisceau laser d'un LIBS) effectue sa mesure physique en incidence directe avec la surface de mesure localement prédéfinie. Vu que ladite surface de mesure est exempte des impuretés alors que l'échantillon à mesurer y accède selon l'invention, il n'est donc avantageusement plus nécessaire de chercher une surface de mesure apparemment libre d'impuretés à l'aide de moyens de reconnaissance complexes et bien souvent trop imprécis.

En d'autres termes, la méthode selon l'invention se caractérise en ce que l'échantillon d'un alliage liquide est en général soumis, avant une mesure de sa composition pour son analyse, à un réchauffage destiné à remettre en solution dans

le bain liquide des composés intermétalliques à base de fer présents sous forme d'impuretés et ainsi de ne préserver que la composition voulue dans la surface voire le volume de mesure directe. Le réchauffage est ainsi conduit jusqu'à ladite température choisie assurant l'homogénéité du bain liquide et une solubilité du fer suffisante contre les impuretés, compte tenu de la composition de l'alliage.

En effet, dans le cas des alliages de zinc et d'aluminium, et pour une teneur donnée en aluminium, la limite de solubilité du fer dans le mélange liquide augmente avec la température. Par exemple, pour une teneur en aluminium voisine de 0,20%, le passage d'une température de 460°C - température usuelle d'un tel bain de galvanisation - à 480°C, double presque la limite de solubilité du fer. Une température encore plus importante, par exemple choisie selon l'invention comprise entre 500°C et 600°C assure alors la solubilité du fer à des teneurs supérieures à celles habituellement rencontrées en condition sursaturée dans les bains de galvanisation. Ce qui permet une remise en solution complète des impuretés (hors de l'échantillon qui atteint ponctuellement la surface de mesure directe) à partir des composés intermétalliques qui ne sont plus, dès lors, de nature à perturber l'analyse par l'organe de mesure pour analyse visant ladite surface.

L'invention prévoit aussi un dispositif apte à mettre en oeuvre la méthode selon l'invention décrite précédemment.

D'une façon générale, à partir d'un dispositif de mesure d'une composition chimique d'un liquide métallique se composant d'un alliage de zinc et d'aluminium formé de façon continue et adapté à un revêtement d'une bande d'acier en défilement continu, ledit dispositif selon l'invention comprend :
- une première cavité comprenant le liquide métallique,
- un organe de mesure de composition du liquide métallique sur une surface de mesure directe dudit liquide,
et est caractérisé en ce qu'un régulateur de température est disposé au voisinage de la surface de mesure de façon à isoler des impuretés à base principale de fer d'un échantillon de liquide métallique atteignant ladite surface de mesure, la surface de mesure directe étant située sur un circuit de circulation (3) du liquide métallique de la première cavité.

La méthode et le dispositif selon l'invention sont ainsi aussi décrits par le contenu des revendications 1 et 2.

Un ensemble de sous-revendications présente également des avantages de l'invention.

Dans la suite du présent document, des modes de réalisations du dispositif selon l'invention sont décrits et, à titre d'exemples, deux d'entre eux sont fournis à l'aide de figures décrites :
- Figure 1: Schéma de principe d'un premier mode de réalisation du dispositif selon l'invention.
- Figure 2: Schéma de principe d'un deuxième mode de réalisation du dispositif selon l'invention.

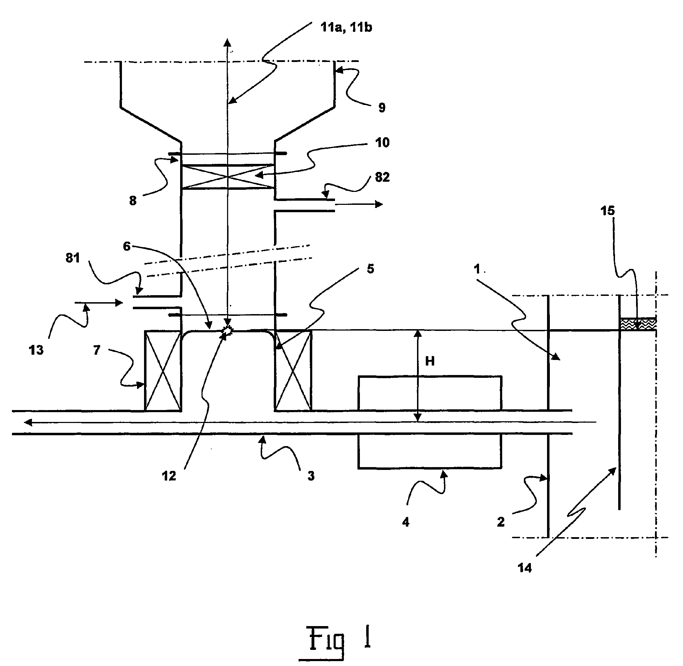

Figure 1 représente un schéma de principe d'un premier mode de réalisation du dispositif selon l'invention.

Ledit dispositif de mesure d'une composition chimique d'un liquide métallique (1) est adapté à un revêtement d'une bande d'acier en défilement continu (non représentée) et comprend :
- une première cavité (2) comprenant le liquide métallique,
- un organe de mesure (9) de composition du liquide métallique sur une surface de mesure directe (6) dudit liquide,
- un régulateur de température (7) étant disposé au voisinage de la surface de mesure (6, 12) de façon à isoler des impuretés à base principale de fer d'un échantillon (5) de liquide métallique atteignant ladite surface de mesure.

Dans cet exemple, la surface de mesure directe est située sur un circuit de circulation (3) du liquide métallique de la première cavité, le dit circuit ayant une entrée de circulation idéalement disposée à une hauteur de la cavité (2) telle qu'une majeure partie d'impuretés, telles que des mattes de surface et de fond, soit maintenue écartée dudit circuit (3).

La première cavité peut être ici un creuset de revêtement et le circuit de circulation (3) peut comprendre alors une boucle externement disposée audit creuset.

Le circuit de circulation (3) peut alternativement comprendre un canal de circulation de liquide métallique interne ou au moins accolé à la première cavité, ledit canal étant idéalement prévu pour un chauffage par induction du bain de liquide métallique. Par ce biais, l'infrastructure de circulation de l'échantillon à mesurer jusqu'à la surface de mesure directe est très simple à réaliser, car ne nécessite seulement qu'une disposition d'une cavité de mesure (5) latérale au canal de chauffage afin d'y pouvoir introduire un faisceau de mesure directe. La solubilité du fer est intrinsèquement atteinte dans le canal de chauffage, éventuellement au besoin par un ajout d'une unité d'induction appropriée pour y atteindre une température ponctuellement bien choisie dans le but de l'invention.

La première cavité peut aussi être au moins un creuset de fusion d'alliage de métaux pour la préparation du liquide métallique, ledit creuset de fusion étant relié à une deuxième cavité tel qu'un creuset de revêtement (tel que décrit ci-dessus) et le circuit de circulation (3) est relié à une canalisation de liquide métallique entre la première et la deuxième cavité. Un tel arrangement multi-cavité permet généralement de pouvoir mieux isoler une majeure partie des mattes/dross ainsi que de mieux réguler les températures des divers bains (fusion/revêtement).

Dans l'exemple de la figure 1, un métal liquide (1) de revêtement peut ainsi être contenu dans un creuset (2) servant au revêtement d'une bande d'acier ou à la fusion de lingots nécessaire pour la constitution composée dudit liquide métallique (1).

Le circuit de circulation (3) de métal liquide peut assurer un transfert du métal liquide entre le creuset de fusion des lingots et le creuset séparé de revêtement de la bande ou assurer une circulation par prélèvement et retour en boucle dans l'un desdits creusets (2). Ladite circulation peut être gravitaire ou forcée par l'intermédiaire d'au moins une pompe (4) disposée en amont du circuit de circulation (3).

Une cavité de mesure (5) est associée sur un flanc du circuit de circulation (3) et reçoit une quantité de métal liquide limitée par ladite surface de mesure directe (6) (libre d'impuretés) située à une altitude (H) correspondant à la surface libre du bain liquide de la cavité initiale (2) dans le cas d'un circuit de circulation gravitaire ou correspondant à la capacité d'élévation du dispositif de pompage en cas de circulation forcée.

Un dispositif de chauffage par induction (7) à courant alternatif monophasé ou polyphasé assure le chauffage de la cavité (5) afin de pouvoir réguler la température d'un échantillon de liquide métallique y circulant et donc selon l'invention de libérer l'échantillon des impuretés non souhaitées.

Une gaine (8) assure la jonction étanche entre la cavité de mesure (5) et un organe d'analyse (9) tel qu'un LIBS. Elle comporte, du côté de l'organe de mesure (9) un hublot (10) transparent au faisceau du laser d'ablation (11a) provenant de l'organe d'analyse et transparent au rayonnement (11b) du plasma (12) généré par le dit faisceau sur la surface de mesure directe (6) du liquide métallique. La gaine (8) est munie d'orifices (81 ; 82) permettant d'assurer, entre la surface du métal liquide (6) et le hublot (10), un balayage (13) par un gaz neutre comme de l'azote. Ceci permet d'éviter une oxydation en surface du liquide métallique pour une meilleure mesure de sa composition.

Un orifice de prélèvement du circuit de circulation (3) en paroi de la cavité (2) est situé en aval d'une chicane (14) dans ladite cavité apte à retenir les particules de composés intermétalliques (15) flottant à la surface du bain (1).

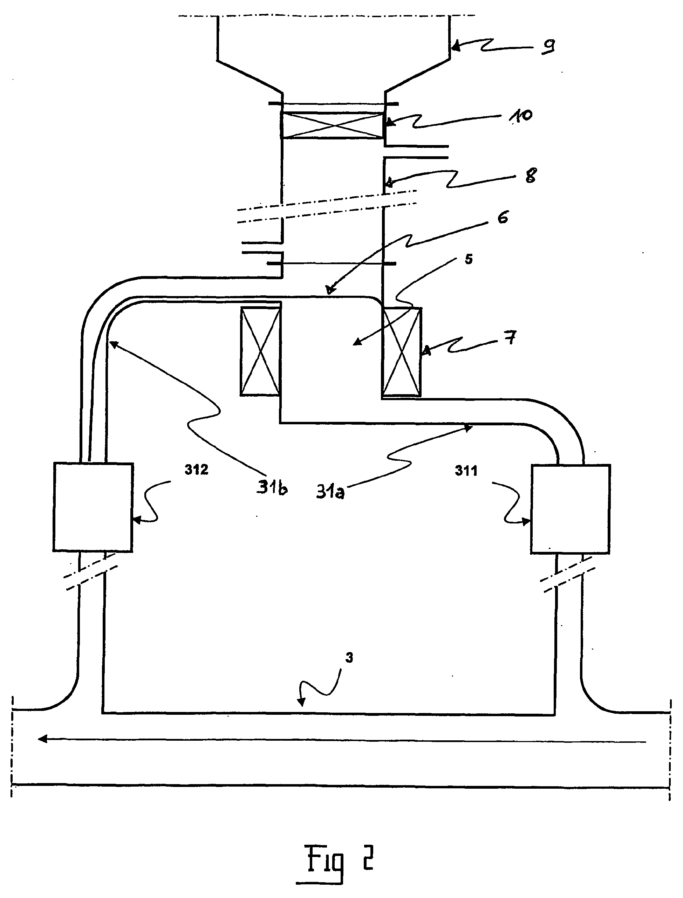

Figure 2 présente un schéma de principe d'un deuxième mode de réalisation du dispositif selon l'invention. A la différence de la figure 1, le circuit de circulation (3) comporte une dérivation sous forme d'une tubulure verticalement montante (8, 31a) d'une hauteur au moins plus élevée que le niveau de liquide dans la première cavité (non représentée, mais possiblement identique à celle de la figure 1) et la surface de mesure directe (6) est définie par le niveau de liquide dans ladite tubulure. La tubulure verticalement montante (31a) est reliée à une tubulure verticalement descendante (31b) aboutissant en retour dans le circuit de circulation (3) suivant le sens de circulation dudit circuit. Chacune des tubulures (31a, 31b) comporte une vanne (311, 312), par exemple électromagnétiques, afin de bloquer provisoirement le liquide dans la dérivation dans la cavité de mesure (5). Plus précisément, au moins une des vannes (311, 312) est soumise à une temporisation de blocage définie pour assurer un chauffage de durée suffisante donc un isolement suffisant des impuretés hors de la surface de mesure, suite à quoi une phase de mesure est engagée et la qualité de mesure est donc améliorée. D'autres avantages sont aussi liés à cet aspect, à savoir : de pouvoir permettre sous cette temporisation un meilleur brassage du mélange liquide à mesurer, en particulier si le moyen de chauffage comprend un élément à induction électromagnétique ; enfin suivant des exigences de l'organe de mesure de composition en surface, afin d'immobiliser l'échantillon à mesurer pour effectuer une mesure sous des conditions stables mécaniquement voire stables optiquement si l'organe de mesure requiert une adaptation optique. Pour le retour du liquide métallique dans le circuit de circulation (3), la tubulure verticalement descendante (31b) comprend une entrée de liquide par débordement sur une paroi de la cavité de mesure (5). Ce débordement fixe aussi simplement le niveau en hauteur de la surface de mesure directe afin d'avantageusement éviter tout recalage optique sur ladite surface.

Tel qu'à la figure 1, un régulateur de température (7) selon figure 2 est disposé sur au moins une partie sous-jacente à la surface de mesure, idéalement au moyen de chauffage par induction, tel qu'un système à courant alternatif monophasé ne générant qu'un brassage modéré du liquide ou un système à courant alternatif polyphasé générant un brassage significatif du liquide. De même, même si non représentée, dans la première cavité, une aspiration de liquide métallique par le circuit de circulation (3) est précédée d'un dispositif à chicane adapté à arrêter au moins des composés flottants) à la surface du bain de liquide prélevé dans lequel la première cavité. Egalement, un circuit de circulation d'un gaz inerte est appliquée à la surface de mesure directe de liquide métallique pour la protéger de réactions d'oxydation et dont un débit de circulation gazeux assure un balayage étanche entre la cavité de mesure (5) comprenant la surface de mesure directe (6) et l'organe de mesure (9) situé face à ladite surface. De la même façon qu'à la figure 1, un hublot (10) en matière transparente à un rayon d'ablation laser et à un rayonnement de plasma peut être disposé entre l'organe de mesure et la surface mesure directe (6) de façon à former une cavité de mesure (5) étanche.

Dans tous les modes de réalisation du dispositif selon l'invention :
- l'organe de mesure est un dispositif d'analyse spectrale par ablation laser sur la surface de mesure directe (6), mais peut être un autre système de mesure de l'état de l'art.
- la surface de mesure directe (6) est idéalement située dans une cavité de mesure (5) construite en matériaux non réactifs avec le liquide métallique tel qu'un acier inoxydable austénitique, une céramique ou un métal revêtu de céramique.

Il est aussi à noter que le circuit de circulation (3) selon figure 1 ou 2 peut comprendre une pompe de prélèvement du liquide métallique au moins à son entrée. La pompe peut être de type électromagnétique, mécanique (par exemple de type centrifuge) ou pneumatique (au moyen par exemple d'un amorçage de pompe par effet Venturi). La pompe assure ainsi une circulation. Si elle est électromagnétique, elle participe au moins partiellement à un chauffage inductif du liquide en vue d'élever le seuil de solubilité du fer et donc d'isoler des impuretés d'un échantillon y circulant tel que l'invention le prévoit. Ainsi, le circuit de circulation (3) peut comprendre une pompe dont des propriétés de pompage sont couplées à une isolation d'impuretés, idéalement dans le cas d'une pompe électromagnétique ou également dans le cas d'une pompe munie d'un palier à débordement apte à séparer physiquement le liquide métallique des impuretés.

Enfin et en particulier pour la figure 3, une variante du dispositif selon l'invention peut prévoir que le circuit de circulation (3) comprend au moins une entrée telle qu'une tubulure ou une branche de prélèvement adaptée à être plongée au travers de la surface de métal liquide dans la cavité. En d'autres termes, le dispositif complet de mesure de composition est rendu amovible et donc positionnable dans la cavité, en formant une branche de prélèvement telle que la tubulure (31a) et une branche de refoulement telle que la tubulure (31b).

## Revendications

1. Méthode de mesure d'une composition chimique d'un liquide métallique (1) adapté à un revêtement d'une bande d'acier, pour laquelle le liquide métallique se composant d'un alliage de zinc et d'aluminium est formé de façon continue dans une première cavité (2) et une mesure de sa composition est effectuée sur une surface de mesure directe (6) dudit liquide, en ce qu'un moyen d'analyse de composition chimique effectue sa mesure physique en incidence directe avec la surface de mesure,
**caractérisée en ce que**
un échantillon de liquide métallique atteignant la surface de mesure est soumis à un réchauffage à une température (7) choisie de façon à isoler de ladite surface de mesure d'impuretés à base principale de fer, le dit réchauffage destiné à remettre en solution dans le bain liquide des composés intermétalliques à base de fer présente sous forme d'impuretés et ainsi de ne préserver que la composition chimique du liquide métallique dans la surface de mesure directe.

2. Dispositif apte à mettre en oeuvre la méthode selon revendication 1 de mesure d'une composition chimique d'un liquide métallique (1) se composant d'un alliage de zinc et d'aluminium formé de façon continue et adapté à un revêtement d'une bande d'acier, comprenant :
- une première cavité (2) comprenant le liquide métallique,
- un organe de mesure (9) de composition du liquide métallique sur une surface de mesure (6) directe dudit liquide, en ce qu'un moyen d'analyse de composition chimique effectue sa mesure physique en incidence directe avec la surface de mesure,
**caractérisé en ce que** :
- la surface de mesure directe est située sur un circuit de circulation (3) du liquide métallique de la première cavité,
- un régulateur de température (7) est disposé au voisinage de la surface de mesure pour un réchauffage de façon à isoler des impuretés à base principale de fer d'un échantillon de liquide métallique atteignant ladite surface de mesure, le dit réchauffage destiné à remettre en solution dans le bain liquide des composés intermétalliques à base de fer présents sous forme d'impuretés et ainsi de ne préserver que la composition chimique du liquide métallique dans la surface de mesure directe.

3. Dispositif selon revendication 2, pour lequel le dit circuit a une entrée de circulation disposée à une hauteur de la cavité telle qu'une majeure partie d'impuretés, telles que des mattes de surface et de fond, soit maintenue écartée dudit circuit.

4. Dispositif selon revendication 3, pour lequel la première cavité est un creuset de revêtement et le circuit de circulation (3) comprend une boucle externement disposée audit creuset.

5. Dispositif selon revendication 2 ou 3, pour lequel le circuit de circulation (3) comprend un canal de circulation de liquide métallique interne ou au moins accolé à la première cavité, ledit canal étant idéalement prévu pour un chauffage par induction du bain de liquide métallique.

6. Dispositif selon revendication 3, pour lequel la première cavité est au moins un creuset de fusion d'alliage de métaux pour la préparation du liquide métallique, ledit creuset de fusion étant relié à une deuxième cavité tel qu'un creuset de revêtement et le circuit de circulation (3) est relié à une canalisation de liquide métallique entre la première et la deuxième cavité.

7. Dispositif selon revendication 4, 5 ou 6, pour lequel le circuit de circulation (3) comporte une dérivation sous forme d'une tubulure verticalement montante (8, 31a) d'une hauteur (H) au moins plus élevée que le niveau de liquide dans la première cavité et la surface de mesure directe est définie par le niveau de liquide dans ladite tubulure.

8. Dispositif selon revendication 7, pour lequel la tubulure verticalement montante (31a) est reliée à une tubulure verticalement descendante (31b) aboutissant dans le circuit de circulation (3).

9. Dispositif selon revendication 8, pour lequel chacune des tubulures (31a, 31b) comporte une vanne (311, 312) afin de bloquer provisoirement le liquide dans la dérivation.

10. Dispositif selon revendication 9, pour lequel au moins une des vannes (311, 312) est soumise à une temporisation de blocage définie pour assurer un isolement suffisant des impuretés hors de la surface de mesure, suite à quoi une phase de mesure est engagée.

11. Dispositif selon une des revendications 8 à 10, pour lequel la tubulure verticalement descendante (31b) comprend une entrée de liquide par débordement.

12. Dispositif selon une des revendications 8 à 10, pour lequel le régulateur de température est disposé sur au moins une partie sous-jacente à la surface de mesure, idéalement au moyen de chauffage par induction, tel qu'un système à courant alternatif monophasé ne générant qu'un brassage modéré du liquide ou un système à courant alternatif polyphasé générant un brassage significatif du liquide.

13. Dispositif selon une des revendications précédentes, pour lequel dans la première cavité, une aspiration de liquide métallique par le circuit de circulation (3) est précédée d'un dispositif à chicane (14) adapté à arrêter au moins des composés flottants (15) à la surface du bain de liquide prélevé dans lequel la première cavité.

14. Dispositif selon une des revendications précédentes, pour lequel un circuit de circulation d'un gaz inerte (13) est appliquée à la surface de mesure directe (6) de liquide métallique pour la protéger de réactions d'oxydation et dont un débit de circulation gazeux assure un balayage étanche entre une cavité de mesure (5) comprenant la surface de mesure directe (6) et l'organe de mesure (9).

15. Dispositif selon une des revendications précédentes, pour lequel un hublot (10) en matière transparente à un rayon d'ablation laser (11a) et à un rayonnement de plasma (11b) est disposé entre l'organe de mesure (9) et la surface mesure directe (6) de façon à former une cavité de mesure (5) étanche.

16. Dispositif selon une des revendications précédentes, pour lequel l'organe de mesure (9) est un dispositif d'analyse spectrale par ablation laser sur la surface de mesure directe (6).

17. Dispositif selon une des revendications précédentes, pour lequel la surface de mesure directe (6) est située dans une cavité de mesure (5) construite en matériaux non réactifs avec le liquide métallique tel qu'un acier inoxydable austénitique, une céramique ou un métal revêtu de céramique.

18. Dispositif selon une des revendications précédentes 3-17, pour lequel le circuit de circulation (3) comprend une pompe de prélèvement au moins à son entrée, ladite pompe étant de type électromagnétique, mécanique - par exemple de type centrifuge - ou pneumatique - au moyen par exemple d'un amorçage de pompe par effet Venturi).

19. Dispositif selon revendication 18, pour lequel le circuit de circulation (3) comprend une pompe dont des propriétés de pompage sont couplées à une isolation d'impuretés, idéalement dans le cas d'une pompe électromagnétique ou d'une pompe munie d'un palier à débordement.

20. Dispositif selon une des revendications précédentes 3-17, pour lequel le circuit de circulation (3) comprend au moins une entrée de prélèvement adaptée à être plongée au travers de la surface de métal liquide.

## Patentansprüche

1. Verfahren zur Messung einer chemischen Zusammensetzung einer metallischen Flüssigkeit (1), die zur Beschichtung eines Stahlbands geeignet ist, wobei die metallische Flüssigkeit, die aus einer Legierung von Zink und Aluminium besteht, kontinuierlich in einem ersten Hohlraum (2) gebildet wird und eine Messung ihrer Zusammensetzung auf einer direkten Messfläche (6) dieser Flüssigkeit durchgeführt wird, dadurch, dass ein Mittel zur Analyse der chemischen Zusammensetzung seine physikalische Messung in direktem Zusammenwirken mit der Messfläche durchführt, **dadurch gekennzeichnet, dass**
eine Probe der metallischen Flüssigkeit, welche die Messfläche erreicht, einer Wiedererwärmung auf eine Temperatur (7) unterzogen wird, die derart gewählt ist, dass Verunreinigungen, die hauptsächlich auf Eisen basieren, von dieser Messfläche isoliert werden, wobei diese Wiedererwärmung dazu bestimmt ist, intermetallische Verbindungen auf der Basis von Eisen, die in Form von Verunreinigungen vorhanden sind, wieder in dem Flüssigkeitsbad in Lösung zu bringen und somit nur die chemische Zusammensetzung der metallischen Flüssigkeit in der direkten Messfläche zu bewahren.

2. Vorrichtung, welche geeignet ist, das Verfahren nach Anspruch 1 zur Messung einer chemischen Zusammensetzung einer metallischen Flüssigkeit (1) durchzuführen, die aus einer Legierung von Zink und Aluminium besteht, die kontinuierlich gebildet wird und zur Beschichtung eines Stahlbands geeignet ist, umfassend:
- einen ersten Hohlraum (2), der die metallische Flüssigkeit umfasst,
- ein Organ zur Messung (9) der Zusammensetzung der metallischen Flüssigkeit auf einer direkten Messfläche (6) der Flüssigkeit, dadurch, dass ein Mittel zur Analyse der chemischen Zusammensetzung seine physikalische Messung in direktem Zusammenwirken mit der Messfläche durchführt, **dadurch gekennzeichnet, dass**:
- sich die direkte Messfläche auf einem Zirkulationskreislauf (3) der metallischen Flüssigkeit des ersten Hohlraums befindet,
- ein Temperaturregler (7) in der Nähe der Messfläche für eine Wiedererwärmung angeordnet ist, um Verunreinigungen, die hauptsächlich auf Eisen basieren, von einer Probe der metallischen Flüssigkeit zu isolieren, welche die Messfläche erreicht, wobei diese Wiedererwärmung dazu bestimmt ist, intermetallische Verbindungen auf der Basis von Eisen, die in Form von Verunreinigungen vorhanden sind, wieder in dem Flüssigkeitsbad in Lösung zu bringen und somit nur die chemische Zusammensetzung der metallischen Flüssigkeit in der direkten Messfläche zu bewahren.

3. Vorrichtung nach Anspruch 2, wobei der Kreislauf einen Zirkulationseingang aufweist, der auf einer solchen Höhe des Hohlraums angeordnet ist, dass ein wesentlicher Teil der Verunreinigungen, wie Oberflächen- und Bodengekrätz, von dem Kreislauf ferngehalten werden.

4. Vorrichtung nach Anspruch 3, wobei der erste Hohlraum ein Beschichtungstiegel ist und der Zirkulationskreislauf (3) eine Schleife umfasst, die außerhalb dieses Tiegels angeordnet ist.

5. Vorrichtung nach Anspruch 2 oder 3, wobei der Zirkulationskreislauf (3) einen Zirkulationskanal für metallische Flüssigkeit umfasst, der sich innerhalb des ersten Hohlraums befindet oder wenigstens an diesen angefügt ist, wobei dieser Kanal idealerweise für eine Erwärmung des Flüssigmetallbades durch Induktion vorgesehen ist.

6. Vorrichtung nach Anspruch 3, wobei der erste Hohlraum wenigstens ein Metalllegierungs-Schmelztiegel zur Herstellung der metallischen Flüssigkeit ist, wobei dieser Schmelztiegel mit einem zweiten Hohlraum wie etwa einem Beschichtungstiegel verbunden ist und der Zirkulationskreislauf (3) mit einer Rohrleitung für metallische Flüssigkeit zwischen dem ersten und dem zweiten Hohlraum verbunden ist.

7. Vorrichtung nach Anspruch 4, 5 oder 6, wobei der Zirkulationskreislauf (3) eine Zweigleitung in Form eines vertikal nach oben führenden Rohrstutzens (8, 31a) mit einer Höhe (H) aufweist, die wenigstens höher als der Flüssigkeitspegel im ersten Hohlraum ist, und die direkte Messfläche durch den Flüssigkeitspegel in dem Rohrstutzen definiert ist.

8. Vorrichtung nach Anspruch 7, wobei der vertikal nach oben führende Rohrstutzen (31a) mit einem vertikal nach unten führenden Rohrstutzen (31b) verbunden ist, der in den Zirkulationskreislauf (3) mündet.

9. Vorrichtung nach Anspruch 8, wobei jeder der Rohrstutzen (31a, 31b) ein Ventil (311, 312) aufweist, um die Flüssigkeit in der Zweigleitung zeitweilig abzusperren.

10. Vorrichtung nach Anspruch 9, wobei wenigstens eines der Ventile (311, 312) einer Absperrverzögerung unterliegt, die so definiert ist, dass eine ausreichende Trennung der Verunreinigungen von der Messfläche sichergestellt ist, wonach eine Messphase eingeleitet wird.

11. Vorrichtung nach einem der Ansprüche 8 bis 10, wobei der vertikal nach unten führende Rohrstutzen (31b) einen Flüssigkeitseintritt durch Überlauf umfasst.

12. Vorrichtung nach einem der Ansprüche 8 bis 10, wobei der Temperaturregler auf wenigstens einem unter der Messfläche liegenden Teil angeordnet ist, idealerweise an dem Induktionsheizmittel, wie etwa einem Einphasen-Wechselstromsystem, das nur ein mäßiges Rühren der Flüssigkeit bewirkt, oder einem Mehrphasen-Wechselstromsystem, das ein erhebliches Rühren der Flüssigkeit bewirkt.

13. Vorrichtung nach einem der vorhergehenden Ansprüche, wobei in dem ersten Hohlraum einer Ansaugung von metallischer Flüssigkeit durch den Zirkulationskreislauf (3) eine Stauplattenvorrichtung (14) vorausgeht, die dafür eingerichtet ist, wenigstens Verbindungen (15) zurückzuhalten, die an der Oberfläche des Flüssigkeitsbades schwimmen, das in dem ersten Hohlraum entnommen wird.

14. Vorrichtung nach einem der vorhergehenden Ansprüche, wobei ein Zirkulationskreislauf eines Inertgases (13) an die direkte Messfläche (6) der metallischen Flüssigkeit geführt wird, um sie vor Oxidationsreaktionen zu schützen, wobei dessen Zirkulationsdurchflussmenge des Gases ein dichtes Überstreichen zwischen einem Messhohlraum (5), der die direkte Messfläche (6) umfasst, und dem Messorgan (9) sicherstellt.

15. Vorrichtung nach einem der vorhergehenden Ansprüche, wobei ein Fenster (10) aus einem Material, das für einen Ablationslaser-Strahl (11a) und für eine Plasmastrahlung (11b) durchlässig ist, zwischen dem Messorgan (9) und der direkten Messfläche (6) angeordnet ist, um einen dichten Messhohlraum (5) zu bilden.

16. Vorrichtung nach einem der vorhergehenden Ansprüche, wobei das Messorgan (9) eine Vorrichtung zur Spektralanalyse mittels Laserablation auf der direkten Messfläche (6) ist.

17. Vorrichtung nach einem der vorhergehenden Ansprüche, wobei sich die direkte Messfläche (6) in einem Messhohlraum (5) befindet, der aus Materialien hergestellt ist, die nicht mit der metallischen Flüssigkeit reagieren können, wie etwa einem austenitischen Edelstahl, einer Keramik oder einem mit Keramik beschichteten Metall.

18. Vorrichtung nach einem der vorhergehenden Ansprüche 3-17, wobei der Zirkulationskreislauf (3) wenigstens an seinem Eingang eine Entnahmepumpe umfasst, wobei die Pumpe vom elektromagnetischen Typ, mechanischen Typ - zum Beispiel vom Typ einer Kreiselpumpe - oder pneumatischen Typ - zum Beispiel mittels Ansaugen der Pumpe durch Venturi-Effekt - ist.

19. Vorrichtung nach Anspruch 18, wobei der Zirkulationskreislauf (3) eine Pumpe umfasst, deren Pumpeigenschaften mit einer Trennung von Verunreinigungen gekoppelt sind, idealerweise im Falle einer elektromagnetischen Pumpe oder einer Pumpe, die mit einer Überlaufvorrichtung gekoppelt ist.

20. Vorrichtung nach einem der vorhergehenden Ansprüche 3-17, wobei der Zirkulationskreislauf (3) wenigstens einen Entnahmeeingang umfasst, der dafür eingerichtet ist, durch die Oberfläche des Flüssigmetalls hindurch eingetaucht zu werden.

## Claims

1. Method for measuring a chemical composition of a metal melt (1) suitable for coating a steel strip, wherein the metal melt comprising a zinc and aluminium alloy is formed continuously in a first cavity (2) and the composition thereof is measured on a direct measurement surface (6) of said melt, wherein a chemical composition analysing means performs its physical measurement in direct incidence on the measurement surface,
**characterised in that**
a sample of metal melt reaching the measurement surface is subjected to re-heating at a temperature (7) selected so as to isolate mainly iron-based impurities from said measurement surface, said re-heating designed to redissolve into the molten bath iron-based intermetallic compounds present in the form of impurities, thereby preserving only the chemical composition of the metal melt in the direct measurement surface.

2. Device designed to implement the method according to claim 1 for measuring a chemical composition of a metal melt (1) comprising a zinc and aluminium alloy formed continuously and suitable for coating a steel strip, comprising:
- a first cavity (2) containing the metal melt,
- a measuring instrument (9) for measuring the composition of the metal melt on a direct measurement surface (6) of said melt, wherein a chemical composition analysing means performs its physical measurement in direct incidence on the measurement surface,
**characterised in that**
- the direct measurement surface is located on a circulation circuit (3) of the metal melt of the first cavity,
- a temperature regulator (7) is disposed in the vicinity of the measurement surface for re-heating so as to isolate mainly iron-based impurities from a sample of metal melt reaching said measurement surface, said re-heating designed to redissolve into the molten bath iron-based intermetallic compounds present in the form of impurities, thereby preserving only the chemical composition of the metal melt in the direct measurement surface.

3. Device according to claim 2, wherein said circuit has a circulation intake disposed at a height level of the cavity such that most impurities, such as top and bottom dross, are kept away from said circuit.

4. Device according to claim 3, wherein the first cavity is a coating pot and the circulation circuit (3) comprises a loop disposed externally to said pot.

5. Device according to claim 2 or 3, wherein the circulation circuit (3) comprises a metal melt circulating channel inside or at least attached to the first cavity, said channel being ideally designed for induction heating of the molten metal bath.

6. Device according to claim 3, wherein the first cavity is at least one metal alloy melting pot for preparing the metal melt, said melting pot being connected to a second cavity such as a coating pot and the circulation circuit (3) is connected to a metal melt conduit between the first and the second cavity.

7. Device according to claim 4, 5 or 6, wherein the circulation circuit (3) comprises a bypass in the form of a vertical riser (8, 31a) of a height (H) at least greater than the melt level in the first cavity and the direct measurement surface is defined by the melt level in said riser.

8. Device according to claim 7, wherein the vertical riser (31a) is connected to a vertical downpipe (31b) terminating in the circulation circuit (3).

9. Device according to claim 8, wherein each of the pipes (31a, 31b) comprises a valve (311, 312) to temporarily block off the melt in the bypass.

10. Device according to claim 9, wherein at least one of the valves (311, 312) is subject to a defined blocking delay to ensure sufficient isolation of the impurities from the measurement surface, following which a measuring phase is initiated.

11. Device according to one of claims 8 to 10, wherein the vertical downpipe (31b) comprises a melt overflow intake.

12. Device according to one of claims 8 to 10, wherein the temperature regulator is disposed on a least one part subjacent to the measurement surface, ideally to the means of induction heating such as a single-phase AC system producing only moderate mixing of the melt or a polyphase AC system producing significant mixing of the melt.

13. Device according to one of the preceding claims, wherein, in the first cavity, metal melt intake by the circulation circuit (3) is preceded by a baffle device (14) for catching at least compounds (15) floating on the surface of the molten bath sampled in the first cavity.

14. Device according to one of the preceding claims, wherein a circulation circuit of an inert gas (13) is applied to the direct metal melt measurement surface (6) to protect it from oxidation reactions, the gas circulation flow rate of which ensures leakproof scavenging between a measurement chamber (5) comprising the direct measurement surface (6) and the measuring instrument (9).

15. Device according to one of the preceding claims, wherein a window (10) of a material transparent to an ablation laser beam (11a) and to plasma radiation (11b) is disposed between the measuring instrument (9) and the direct measurement surface (6) so as to form a leakproof measurement chamber (5).

16. Device according to one of the preceding claims, wherein the measuring instrument (9) is a spectral analysis device performing laser ablation of the direct measurement surface (6).

17. Device according to one of the preceding claims, wherein the direct measurement surface (6) is located in a measurement chamber (5) made of materials that are unreactive with the metal melt, such as an austenitic stainless steel, a ceramic or a ceramic-coated metal.

18. Device according to one of the preceding claims 3-17, wherein the circulation circuit (3) comprises a pump for sampling the metal melt at least at its intake, said pump being electromagnetic, mechanical, e.g. of the centrifugal type, or pneumatic by means of e.g. Venturi effect pump priming.

19. Device according to claim 18, wherein the circulation circuit (3) comprises a pump whose pumping properties are coupled with isolation of impurities, ideally in the case of an electromagnetic pump or a pump equipped with an overflow stage.

20. Device according to one of the preceding claims 3-17, wherein the circulation circuit (3) comprises at least one sampling intake capable of being dipped through the molten metal surface.
